# EUROPEAN PATENT SPECIFICATION

(11) **EP 3 135 536 B1**
(45) Date of publication and mention of the grant of the patent: **07.04.2021**
(21) Application number: 16179479.7
(22) Date of filing: 14.07.2016
(51) Int. Cl.: F21S 41/143, F21S 41/153, F21S 41/16, F21S 41/663, F21S 41/675, B60Q 1/14

(54) **VEHICLE HEADLAMP SYSTEM**
FAHRZEUGSCHEINWERFERSYSTEM
SYSTÈME DE PHARE DE VÉHICULE

(30) Priority: 25.08.2015 JP 2015165458
(43) Date of publication of application: 01.03.2017
(73) Proprietor: Stanley Electric Co., Ltd., Meguro-ku Tokyo 153 (JP)
(72) Inventor: UCHIDA, Mitsuhiro, Tokyo 153-8636 (JP); KITA, Yasushi, Tokyo 153-8636 (JP)
(74) Representative: Schmidbauer, Andreas Konrad

(56) References cited:
- EP-A1- 3 028 897
- WO-A1-2014/205466
- DE-A1-102007 063 183
- DE-A1-102014 001 201
- JP-A- 2010 232 044
- US-A1- 2011 235 349

## Description

### BACKGROUND OF THE INVENTION

### Field of the Invention

The present invention relates to a vehicle headlamp system that irradiates light in front of the vehicle.

### Description of the Background Art

To improve forward visibility while ensuring that glare is not cast onto an oncoming vehicle or preceding vehicle (hereinafter referred to as "forward vehicle") that exists in front of the vehicle, there are known techniques for selectively shading a region where the forward vehicle exists and irradiating light in all other regions. Such selective light irradiation is achieved by selectively turning on and off each LED in accordance with the region where the forward vehicle exists using a light source comprising a plurality of light-emitting diodes (LEDs) arranged in a matrix shape, and irradiating the light emitted from these LEDs toward the front of the vehicle, for example. Such prior art is disclosed in JP 2011-198720 A, for example. Additionally, as another method, such selective light irradiation can be achieved by controlling semiconductor laser elements to turn on at high speed and scanning the emitted light using a MEMS mirror or the like. Such prior art is disclosed in JP 2009-224039 A, for example.

However, when a light source comprising a plurality of LEDs arranged in a matrix shape is used, an extremely large number of LEDs and a control unit or the like for individually controlling and driving these LEDs are required to perform light distribution control at a high resolution in accordance with the state of the forward vehicle and ensure an extensive range in which the light can be irradiated vertically and horizontally. This has led to the inconveniences of increased system complexity and increased cost.

On the other hand, when semiconductor laser elements and an MEMS mirror or the like for scanning the emitted light are used, inconveniences arise such as a relatively narrow range in which the emitted light can be scanned (about ±10° to the left and right, for example), and difficulties in ensuring an extensive range in which the light can be irradiated. While use of a plurality of lamp units comprising semiconductor laser elements, an MEMS (Micro Electro Mechanical Systems) mirror, and the like is conceivable, such use still results in the inconveniences of increased system complexity and increased cost.

WO 2014/205466 A1 discloses a headlight for motor vehicles, having multiple light sources and an optical system associated with the light sources, wherein a first lighting unit having at least one light source for generating a first dynamically variable luminous image and a second laser lighting unit having at least one laser light source, at least one beam deflector unit and at least one light conversion unit are provided, and the optical system is configured to bring together the two luminous images, generated by the first lighting unit and in the light conversion unit in the second laser lighting unit, to provide an overall distribution of light onto a roadway.

EP 3 028 897 A1 forms part of the prior art according to Art. 54 (3) EPC and discloses a vehicle lighting device and a method for producing a front light distribution by means of a motor vehicle lighting device which comprises a base lighting device for emitting a basic light distribution with predefined shadable zones and a laser addition light with a laser light source and a light conversion device for converting the laser light into a variable additional light distribution. According to the method, a basic light distribution with at least one shaded zone is generated, and an additional light distribution is generated in such a way that it at least partially covers the shaded zone.

It is therefore an object of specific aspects according to the present invention to provide a technique capable of achieving light distribution control at a high resolution in accordance with the state of a forward vehicle and ensuring an extensive range in which light can be radiated vertically and horizontally while suppressing cost.

### SUMMARY OF THE INVENTION

A vehicle headlamp system according to the present invention is provided as set forth in claim 1. Preferred embodiments of the present invention may be gathered from the dependent claims.

According to the foregoing configuration, while suppressing cost, it is possible to achieve light distribution control at a high resolution in accordance with the state of a forward vehicle and to ensure an extensive range in which light can be radiated vertically and horizontally.

Further, preferably the second region includes a roadside region that forms a region on the side of a roadside (a sidewalk, for example), and an oncoming lane region that forms a region on the oncoming lane side, and the roadside region and the oncoming lane region are set to widths that are left-right asymmetrical across the center area in front of the vehicle. In this case, preferably among the individual light distribution regions that form the roadside region, the individual light distribution regions closest to the oncoming lane region are set to a width narrower than that of the individual light distribution regions farthest from the oncoming lane region; among the individual light distribution regions that form the oncoming lane region, the individual light distribution regions closest to the roadside region are set to a width narrower than that of the individual light distribution regions farthest from the roadside region; and the number of the individual light distribution regions set to a width narrower than that of the individual light distribution regions farthest from the oncoming lane region in the roadside region is set greater than the number of the individual light distribution regions set to a width narrower than that of the individual light distribution regions farthest from the roadside region in the oncoming lane region.

### BRIEF DESCRIPTION OF THE DRAWINGS

Fig. 1 is a block diagram showing the configuration of a vehicle headlamp system of one embodiment.
Fig. 2 is a drawing showing a configuration example of the LD unit.
Figs. 3A and 3B are drawings showing a configuration example of the LED unit.
Figs. 4A and 4B are drawings for explaining the operation details of the vehicle headlamp system.
Figs. 5A and 5B are drawings for explaining another operation details of the vehicle headlamp system.
Figs. 6A and 6B are drawings for explaining another operation details of the vehicle headlamp system.

### DESCRIPTION OF THE PREFERRED EMBODIMENTS

The following describes embodiments of the present invention with reference to drawings.

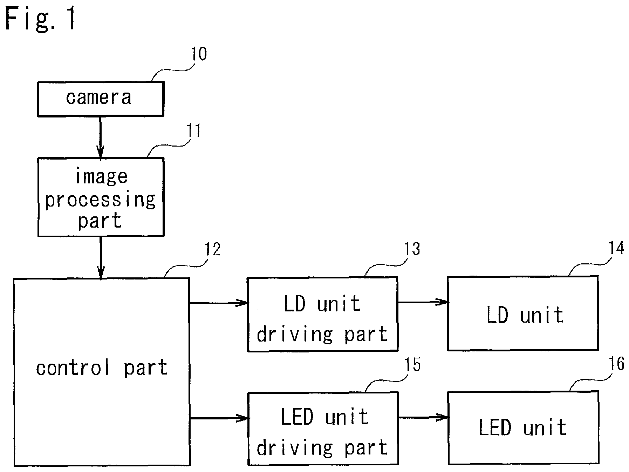

Fig. 1 is a block diagram showing the configuration of a vehicle headlamp system of one embodiment. The vehicle headlamp system of this embodiment is constituted by including a camera 10, an image processing part 11, a control part 12, a laser diode (LD) unit driving part 13, a laser diode (LD) unit 14, an LED unit driving part 15, and an LED unit 16. It should be noted that the control part 12, the LD unit driving part 13, and the LED unit driving part 15 correspond to the "control means."

The camera 10 is provided in a predetermined position (such as on a dashboard, in an upper portion of a front windshield, or the like, for example) of the vehicle, and captures images of the space in front of the vehicle.

The image processing part 11 detects a position of an oncoming vehicle or a preceding vehicle that exists in front of the vehicle (hereinafter simply referred to as "forward vehicle") on the basis of an image of the space in front of the vehicle captured by the camera 10.

The control part 12 performs control for selectively irradiating light in accordance with a position of the forward vehicle detected by the image processing part 11. This control part 12 is configured by executing a predetermined operation program in a computer system that includes a CPU, a ROM, a RAM, and the like, for example. Specifically, within the total range in which light can be irradiated by the vehicle headlamp system, the control part 12 sets a certain range that includes a position of a forward vehicle detected by the image processing part 11 as a non-irradiation range, and all other ranges as a light irradiation range, and outputs a control signal for forming a light distribution pattern on the basis of the light irradiation range and non-irradiation range to the LD unit driving part 13 and the LED unit driving part 15.

The LD unit driving part 13 supplies a driving signal to the LD unit 14 on the basis of the control signal provided from the control part 12. The LD unit 14 is constituted by including a laser diode, and selectively irradiates light toward the front of the vehicle on the basis of a driving signal supplied from the LD unit driving part 13.

The LED unit driving part 15 supplies a driving signal to the LED unit 16 on the basis of the control signal provided from the control part 12. The LED unit 16 is constituted by including a pluralty of LEDs (light-emitting diodes), and selectively irradiates light toward the front of the vehicle on the basis of a driving signal supplied from the LED unit driving part 15.

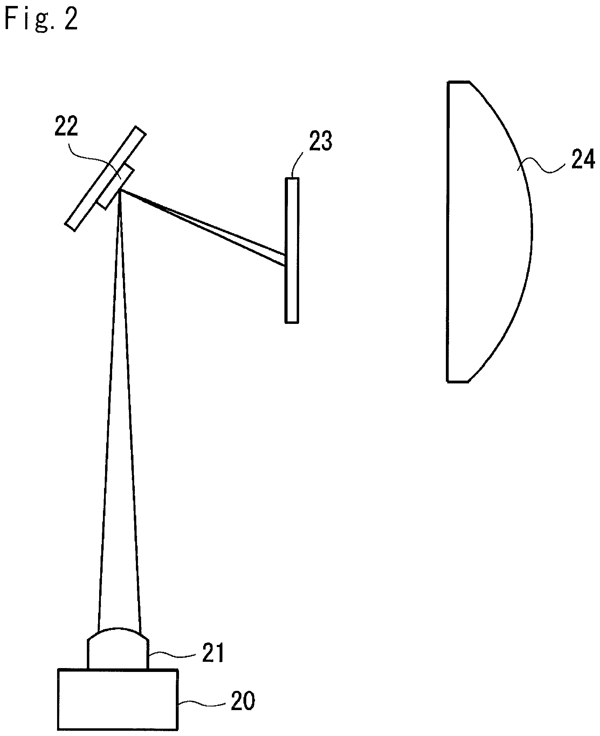

Fig. 2 is a drawing showing a configuration example of the LD unit. The illustrated LD unit 14 is constituted by including a laser diode 20, a condenser lens 21, an MEMS mirror 22, a wavelength conversion member 23, and a projection lens 24. It should be noted that the laser diode 20 corresponds to the "first light-emitting element," and the MEMS (Micro Electro Mechanical Systems) mirror 22 corresponds to the "scanning element."

The laser diode 20 is a semiconductor light-emitting element that emits a laser beam of a blue spectral region (an emission wavelength of 450 nm, for example) as an excitation light, for example. The MEMS mirror 22 is driven by the LD unit driving part 13 and scans a laser beam that enters from the laser diode 20 in two-dimensional directions (a horizontal direction and a vertical direction) and causes the laser beam to enter the wavelength conversion member 23.

The wavelength conversion member 23 converts at least a portion of the entered laser beam into a different wavelength. According to this embodiment, the wavelength conversion member 23 includes a fluorescent substance that is excited by the laser beam and produces yellow light. The colors of this yellow light and the laser beam (blue) that is transmitted through the wavelength conversion member 23 are mixed, thereby achieving a pseudo white light. The projection lens 24 projects the light emitted from the wavelength conversion member 23 toward the front of the vehicle.

In this LD unit 14, the laser beam emitted from the laser diode 20 is condensed by a condenser lens 21, and enters the MEMS mirror 22. The MEMS mirror 22 scans this laser beam in two-dimensional directions and causes the laser beam to enter the wavelength conversion member 23. The scan operation by the MEMS mirror and the on/off driving of the laser diode 20 are synchronized by the control performed by the LD unit driving part 13, thereby forming a light distribution pattern corresponding to the light irradiation range and non-irradiation range set by the control part 12. This light distribution pattern is projected in front of the vehicle by the projection lens 24, thereby achieving selective light irradiation in accordance with the position of the forward vehicle.

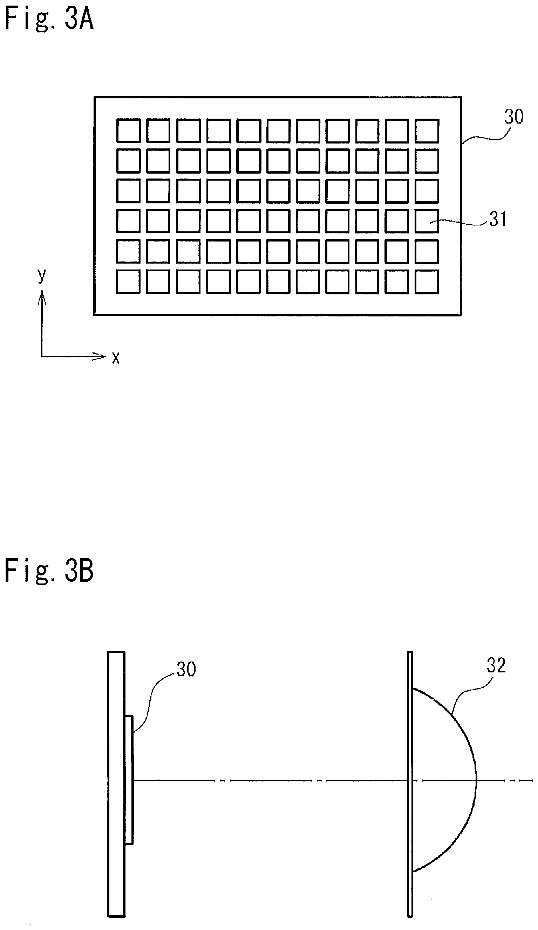

Figs. 3A and 3B are drawings showing a configuration example of the LED unit. The LED unit 16 is constituted by including an LED array 30 and a projection lens 32 (refer to Fig. 3B). The LED array 30 includes a plurality of LEDs 31 arranged in a matrix shape. The LEDs 31 may be arranged in a lattice shape such as illustrated or, for example, a zigzag shape. The LEDs 31 are individually controlled to turn on by the LED unit driving part 15. It should be noted that each of the LEDs 31 corresponds to the "second light-emitting element."

The light emitted from the LEDs 31 of the LED array 30 is projected in front of the vehicle by the projection lens 32. The LEDs 31 are individually controlled to turn on and off by the LED unit driving part 15 in correspondence with the light irradiation range and non-irradiation range set by the control part 12, thereby forming a preferred light distribution pattern and achieving selective light irradiation in accordance with the position of the forward vehicle.

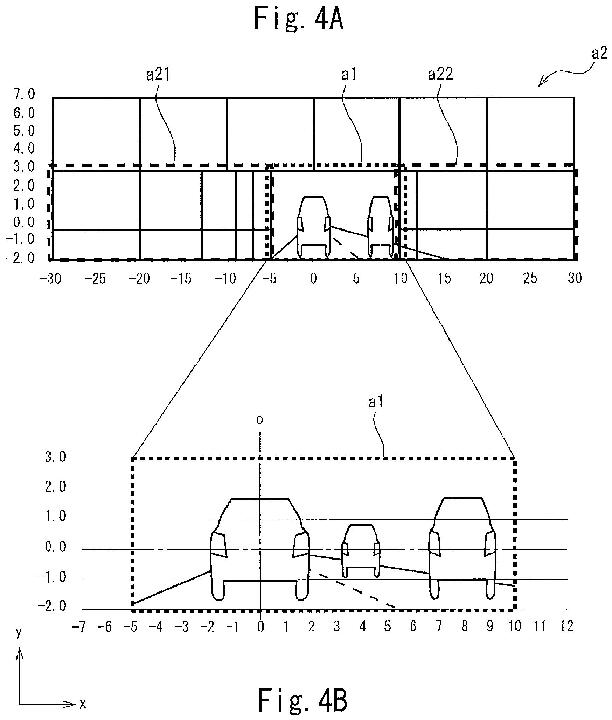

Figs. 4A and 4B are drawings for explaining the operation details of the vehicle headlamp system. Figs. 4A and 4B schematically illustrate a control example of the situation in front of the vehicle and the light distribution pattern corresponding to the forward vehicles. As illustrated in Fig. 4A, within the total range in which light can be irradiated, a first region a1 is set near the center area in front of the vehicle, and selective light irradiation is performed by the LD unit 14 in this first region a1. In the illustrated example, two forward vehicles exist and thus selective light irradiation is performed by the LD unit 14 in the interior of the first region a1 with the region where these forward vehicles exist set as the non-irradiation range and all other regions set as the light irradiation range.

Fig. 4B is a drawing showing the first region being enlarged. As illustrated in the figure, the first region a1 is set as a region that overlaps with a virtual vertical line o presumably in the center area in front of the vehicle using the vehicle as a reference. According to this embodiment, the first region a1 is left-right asymmetrically set across the virtual vertical line o in the center area in front of the vehicle. Specifically, as illustrated, the first region a1 is set so that a width of a right-side region is wider than a width of a left-side region with the virtual vertical line o in the center area in front of the vehicle therebetween. The first region a1 in the illustrated example is set in a range within -5° leftward, 10° rightward, 3° upward, and -2° downward when indicated as angles using the center of the vehicle as a reference.

It should be noted that the settings of the illustrated left-right asymmetrical region presume that legally vehicles travel on the left side of the road and there are many cases in which a forward vehicle (oncoming vehicle) exists in the right-side region, using the vehicle as a reference. In a case where legally vehicles travel on the right side of the road, the regions may be reversely set.

Further, as illustrated in Fig. 4A, within the total range in which light can be irradiated, a second region a2 is set so as to include each region disposed on the left side, right side, and upper side of the first region a1, and selective light irradiation is performed by the LED unit 16 in this second region a2. In this illustrated example, the second region a2 includes a plurality of split regions (light distribution regions) arranged vertically and horizontally, and light irradiation is individually performed by the LED unit 16 in each of the split regions. The second region a2 includes six split regions in an upper section, and eight split regions in middle and lower sections, respectively. Each of the split regions increasingly decreases in length (height) in the vertical direction, from the upper section toward the lower section. Further, each of the split regions increasingly decreases in width in the horizontal direction the closer the region is to the first region a1 in middle and lower sections.

It should be noted that, in addition to the plurality of LEDs 31 corresponding to the second region a2, the LED array 30 of the LED unit 16 may further comprise the LEDs 31 capable of irradiating the first region a1. This makes it possible to continue irradiating light in the first region a1 even in the event of failure of the LD unit 14.

As described above, there are many cases in which forward vehicles exist near the center area in front of the vehicle, and the relative positions of these forward vehicles slightly vary according to the distance from the vehicle. Thus, in this embodiment, the LD unit 14 capable of higher definition light distribution control is used for the first region a1 corresponding to near the center area in front of the vehicle. Further, because the presumed existing position of the forward vehicles is left-right asymmetrical with respect to the center area in front of the vehicle, the first region a1 is left-right asymmetrically set in correspondence thereto. Further, the LED unit 16 is used for the second region a2 that does not require light distribution control with such a high degree of definition, and each of the split regions is given a relatively large surface area, making it possible to reduce the number of LEDs required and simplify the LED unit 16.

Further, as illustrated in Fig. 4A, in this embodiment the region settings for not only the first region a1 but also the second region a2 are left-right asymmetrical. In this case, within the second region a2, a roadside region a21 is set so as to have a wider width than that of an oncoming lane region a22. To be precise, among the split regions (light distribution regions) of the roadside region a21, the split regions disposed on the outside (the side opposite the center area in front of the vehicle) are set so as to have a wider width than that of the split regions disposed on the inside (the center area in front of the vehicle). Further, similarly, among the split regions included in the oncoming lane region a22, the split regions disposed on the outside (the side opposite the center area in front of the vehicle) are set so as to have a wider width than that of the split regions disposed on the inside (the center area in front of the vehicle). Then, the number of split regions having a narrow width in the roadside region a21 is set greater than the number of split regions having a narrow width in the oncoming lane region a22. As a result, advantages similar to those achieved when the first region a1 is left-right asymmetrically set are achieved.

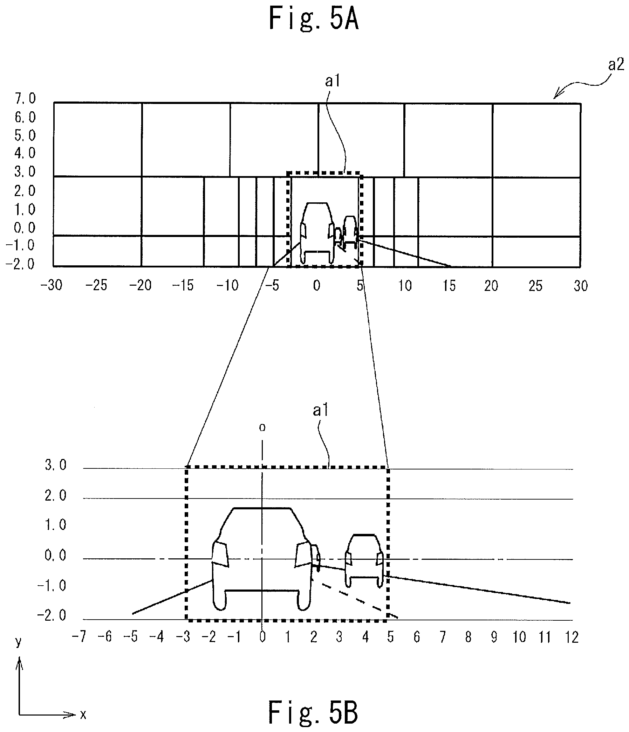

Figs. 5A and 5B are drawings for explaining another operation details of the vehicle headlamp system. As illustrated in Figs. 5A and 5B, the range of the first region a1 may be more narrowly set. Specifically, the first region a1 in the illustrated example is set in a range within -3° leftward, 5° rightward, 3° upward, and -2° downward when indicated as angles using the center of the vehicle as a reference.

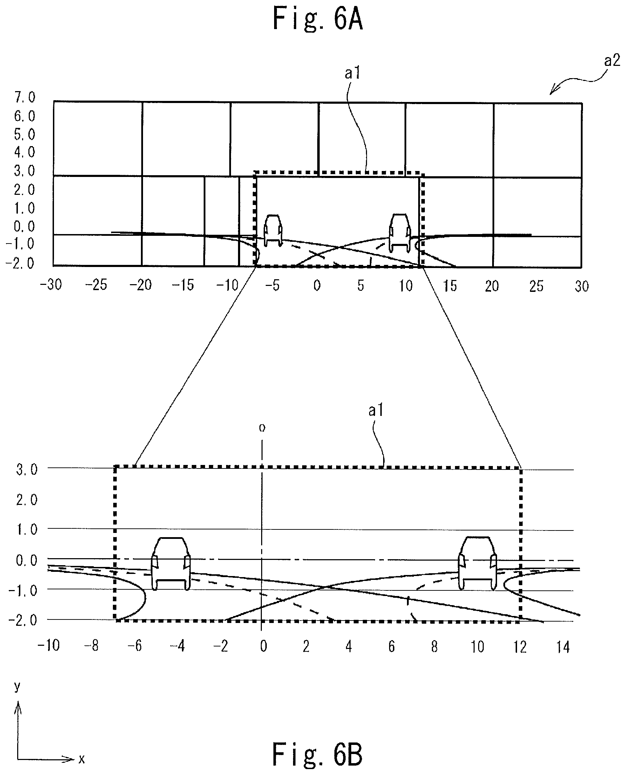

Figs. 6A and 6B are drawings for explaining another operation details of the vehicle headlamp system. As illustrated in Figs. 6A and 6B, the range of the first region a1 may be more widely set. Specifically, the first region a1 in the illustrated example is set in a range within -7° leftward, 12° rightward, 3° upward, and -2° downward when indicated as angles using the center of the vehicle as a reference. The first region a1 set so widely is effective on a gentle curved road such as illustrated, for example.

It should be noted that the width of the first region a1 can be variously set as illustrated in Figs. 4A to 6B, allowing variable setup in accordance with road conditions, for example. Specifically, road type information may be acquired from a car navigation system or the like (not illustrated) and, for example, the width of the first region a1 may be set in accordance with each road type of a general road and a highway, and a straight road and a curved road. Or, a white line or the like on the road surface may be detected by the image processing part 11, the road conditions may be assessed by the control part 12 in accordance with the detection result, and the width of the first region a1 may be set in accordance with the assessment result. In such cases, the width of the second region a2 in which the light is to be irradiated by the LED unit 16 may also be variably set in accordance with the fluctuation in width of the first region a1.

According to the foregoing embodiments, while suppressing cost, it is possible to achieve light distribution control at a high resolution in accordance with the state of a forward vehicle and to ensure an extensive range in which light can be radiated vertically and horizontally.

Note that this invention is not limited to the subject matter of the foregoing embodiments, and can be implemented by being variously modified within the scope of the present invention as defined by the appended claims. For example, the configuration of the LD unit and LED unit is merely an example and not limited thereto. Further, while the example given for the first light-emitting element in the above is a laser diode, the first light-emitting element is not limited thereto, and may be an LED, for example.

## Claims

1. A vehicle headlamp system comprising:
a camera (10) which is adapted to capture images of a space in front of the vehicle;
an image processing part (11) detecting a position of a forward vehicle on the basis of the images captured by the camera (10);
a first lamp unit (14, 20-24) including at least a first light-emitting element (20) and a scanning element (22) that scans light emitted from the first light-emitting element (20);
a second lamp unit (16, 30-32) including at least a plurality of arranged second light-emitting elements (31) and a lens (32) that projects the light emitted from each of the second light-emitting elements (31); and
control means (12, 13, 15) for controlling the operation of the first and second lamp units (14, 16);
wherein:
the first lamp unit (14) is adapted to perform selective light irradiation in a first region (a1) that overlaps with a center area in front of the vehicle in accordance with a position of the forward vehicle by the control of the control means (12, 13); and
the second lamp unit (16) is adapted to perform selective light irradiation in a second region (a2) that includes at least each region (a21, a22) disposed on a left side and a right side of the first region (a1), in accordance with a position of the forward vehicle by the control of the control means (12, 15);
the first region (a1) is left-right asymmetrically set across the center area in front of the vehicle.
the first lamp unit (14) is adapted to perform a higher definition and selective light irradiation than the second lamp unit (16);
the width of the first region (a1) is variably set at least based on road type information acquired from a car navigation system or based on road surface conditions detected by the image processing part (11) where the conditions are assessed by the control part (12, 13, 15) in accordance with the detection result.

2. The vehicle headlamp system according to either claim 1, wherein:
the second region (a2) includes a roadside region (a21) that forms a region on the side of a roadside, and an oncoming lane region (a22) that forms a region on the oncoming lane side; and
the roadside region (a21) and the oncoming lane region (a22) are set to widths that are left-right asymmetrical across the center area in front of the vehicle.

3. The vehicle headlamp system according to claim 2, wherein:
among the individual light distribution regions that form the roadside region (a21), the individual light distribution regions closest to the oncoming lane region (a22) are set to a width narrower than that of the individual light distribution regions farthest from the oncoming lane region (a22);
among the individual light distribution regions that form the oncoming lane region (a22), the individual light distribution regions closest to the roadside region (a21) are set to a width narrower than that of the individual light distribution regions farthest from the roadside region (a21); and
the number of the individual light distribution regions set to a width narrower than that of the individual light distribution regions farthest from the oncoming lane region (a22) in the roadside region (a21) is set greater than the number of the individual light distribution regions set to a width narrower than that of the individual light distribution regions farthest from the roadside region (a21) in the oncoming lane region (a22).

4. The vehicle headlamp system according to any one of claims 1 to 3, wherein:
the second region (a2) further includes a region disposed on an upper side of the first region (a1).

5. The vehicle headlamp system according to claim 3, wherein:
the first light-emitting element (14) is a laser diode; and
the plurality of arranged second light-emitting elements (31) is an LED array.

6. The vehicle headlamp system according to claim 5, wherein:
the scanning element (22) of the first lamp unit (14) is a MEMS mirror that scans a laser beam emitted from the laser diode in two-dimensional directions.

## Patentansprüche

1. Fahrzeugscheinwerfersystem, welches Folgendes aufweist:
eine Kamera (10), die ausgebildet ist, um Bilder eines Raums vor dem Fahrzeug aufzunehmen;
einen Bildverarbeitungsteil (11), der eine Position eines vorderen Fahrzeugs auf der Basis der Bilder detektiert, die durch die Kamera (10) aufgenommen wurden;
eine erste Lampeneinheit (14, 20-24), die zumindest ein erstes lichtemittierendes Element (20) und ein Scann- bzw. Führungselement (22) aufweist, welches Licht, welches von dem ersten lichtemittierenden Element (20) emittiert wurde, scannt bzw. führt;
eine zweite Lampeneinheit (16, 30-32), die zumindest eine Vielzahl von angeordneten zweiten lichtemittierenden Elementen (31) und eine Linse (32) aufweist, welche das Licht projiziert, welches von jedem der zweiten lichtemittierenden Elemente (31) emittiert wurde; und
Steuermittel (12, 13, 15) zum Steuern des Betriebs der ersten und zweiten Lampeneinheiten (14, 16);
wobei
die erste Lampeneinheit (14) ausgebildet ist, um selektive Lichtbestrahlung in einer ersten Region (a1) auszuführen, die mit einem mittleren Bereich vor dem Fahrzeug überlappt, und zwar gemäß einer Position des vorderen Fahrzeugs durch die Steuerung der Steuermittel (12, 13); und die zweite Lampeneinheit (16) ausgebildet ist, um eine selektive Lichtbestrahlung in einer zweiten Region (a2) auszuführen, die zumindest jede Region (a21, a22) aufweist, die auf einer linken Seite und auf einer rechten Seite der ersten Region (a1) angeordnet sind, und zwar gemäß einer Position des vorderen Fahrzeugs durch die Steuerung der Steuermittel (12, 15);
die erste Region (a1) links-rechts asymmetrisch über den mittleren Bereich vor dem Fahrzeug eingestellt ist;
die erste Lampeneinheit (14) ausgebildet ist, um eine Lichtbestrahlung mit höherer Definition und Selektivität auszuführen als die zweite Lampeneinheit (16);
die Breite der ersten Region (a1) variabel zumindest basierend auf Stra-ßentypinformation eingestellt wird, die von einem Fahrzeugnavigationssystem aktiviert wurde, oder basierend auf Straßenoberflächenbedingungen, die durch den Bildverarbeitungsteil (11) detektiert werden, wobei die Bedingungen durch den Steuerteil (12, 13, 15) in Übereinstimmung mit dem Detektionsergebnis bewertet werden.

2. Fahrzeugscheinwerfersystem nach Anspruch 1, wobei
die zweite Region (a2) eine Straßenseiten- bzw. Straßenrandregion (a21) aufweist, die eine Region auf der Seite eines Straßenrandes bildet, und eine Gegenfahrbahnregion (a22), die eine Region auf der Gegenfahrbahnseite bildet; und
die Straßenrandregion (a21) und die Gegenfahrbahnregion (a22) auf Breiten eingestellt sind, die links-rechts über den mittleren Bereich vor dem Fahrzeug asymmetrisch sind.

3. Fahrzeugscheinwerfersystem nach Anspruch 2, wobei
von den einzelnen Lichtverteilungsregionen, die die Straßenrandregion (a21) bilden, die einzelnen Lichtverteilungsregionen am nächsten zu der Gegenfahrbahnregion (a22) auf eine Breite eingestellt sind, die schmaler ist als jene der einzelnen Lichtverteilungsregionen am weitesten entfernt von der Gegenfahrbahnregion (a22);
von den einzelnen Lichtverteilungsregionen, die die Gegenfahrbahnregion (a22) bilden, die einzelnen Lichtverteilungsregionen am nächsten zur Straßenrandregion (a21) auf eine Breite eingestellt sind, die schmaler ist als jene der einzelnen Lichtverteilungsregionen am weitesten entfernt von der Straßenrandregion (a21); und
die Anzahl der einzelnen Lichtverteilungsregionen, die auf eine Breite eingestellt sind, die schmaler ist als jene der einzelnen Lichtverteilungsregionen am weitesten entfernt von der Gegenfahrbahnregion (a22), in der Straßenrandregion (a21) größer festgelegt ist als die Anzahl der einzelnen Lichtverteilungsregionen, die auf eine Breite eingestellt sind, die schmaler ist als jene der einzelnen Lichtverteilungsregionen am weitesten entfernt von der Straßenrandregion (a21), in der Gegenfahrbahnregion (a22).

4. Fahrzeugscheinwerfersystem nach einem der Ansprüche 1 bis 3, wobei
die zweite Region (a2) weiter eine Region aufweist, die auf einer oberen Seite der ersten Region (a1) angeordnet ist.

5. Fahrzeugscheinwerfersystem nach Anspruch 3, wobei
das erste lichtemittierende Element (14) eine Laserdiode ist; und
die Vielzahl von angeordneten zweiten lichtemittierenden Elementen (31) eine LED-Anordnung ist.

6. Fahrzeugscheinwerfersystem nach Anspruch 5, wobei
das Scann- bzw. Führungselement (22) der ersten Lampeneinheit (14) ein MEMS-Spiegel ist, der einen Laserstrahl, der von der Laserdiode emittiert worden ist, in Richtungen in zwei Dimensionen scannt bzw. führt.

## Revendications

1. Système de phare de véhicule comprenant :
une caméra (10) qui est adaptée pour capturer des images d'un espace à l'avant du véhicule ;
une partie de traitement d'image (1) détectant une position d'un véhicule avant sur la base des images capturées par la caméra (10) ;
une première unité de lampe (14, 20-24) comportant au moins un premier élément émetteur de lumière (20) et un élément de balayage (22) qui balaie la lumière émise par le premier élément émetteur de lumière (20) ;
une deuxième unité de lampe (16, 30-32) comportant au moins une pluralité de deuxièmes éléments électroluminescents agencés (31) et une lentille (32) qui projette la lumière émise par chacun des deuxièmes éléments émetteurs de lumière (31) ; et
des moyens de commande (12, 13, 15) pour commander le fonctionnement des première et deuxième unités de lampe (14, 16) ;
dans lequel :
la première unité de lampe (14) est adaptée pour effectuer une irradiation lumineuse sélective dans une première région (a1) qui chevauche une zone centrale à l'avant du véhicule conformément à une position du véhicule avant par la commande des moyens de commande (12, 13) ; et
la deuxième unité de lampe (16) est adaptée pour effectuer une irradiation lumineuse sélective dans une deuxième région (a2) qui comporte au moins chaque région (a21, a22) disposée sur un côté gauche et un côté droit de la première région (a1), conformément à une position du véhicule à l'avant par la commande des moyens de commande (12, 15) ;
la première région (a1) est disposée asymétriquement gauche-droite à travers la zone centrale devant le véhicule ;
la première unité de lampe (14) est adaptée pour effectuer une irradiation lumineuse sélective et à définition plus élevée que la deuxième unité de lampe (16) ;
la largeur de la première région (a1) est réglée de façon variable sur la base d'informations du type de route acquises par un système de navigation du véhicule ou sur la base de conditions de surface de route détectées par la partie de traitement d'image (11) où les conditions sont évaluées par la partie de commande (12, 13, 15) conformément au résultat de détection.

2. Système de phare de véhicule selon la revendication 1, dans lequel :
la deuxième région (a2) comporte une région de bord de route (a21) qui forme une région sur le côté d'un bord de route, et une région de voie de circulation inverse (a22) qui forme une région du côté de voie de circulation inverse ; et
la région de bord de route (a21) et la région de voie de circulation inverse (a22) sont réglées sur des largeurs qui sont asymétriques gauche-droite sur la zone centrale devant le véhicule.

3. Système de phare de véhicule selon la revendication 2, dans lequel :
parmi les régions de distribution de lumière individuelles qui forment la région de bord de route (a21), les régions de distribution de lumière individuelles les plus proches de la région de voie de circulation inverse (a22) sont réglées à une largeur plus étroite que celle des régions de distribution de lumière individuelles les plus éloignées de la région de voie de circulation inverse (a22) ;
parmi les régions de distribution de lumière individuelles qui forment la région de voie de circulation inverse (a22), les régions de distribution de lumière individuelles les plus proches de la région de bord de route (a21) sont réglées sur une largeur plus étroite que celle des régions de distribution de lumière individuelles les plus éloignées de la région de bord de route (a21) ; et
le nombre de régions de distribution de lumière individuelles réglées sur une largeur plus étroite que celle des régions de distribution de lumière individuelles les plus éloignées de la région de voie de circulation inverse (a22) dans la région de bord de route (a21) est réglé plus grand que le nombre de régions de distribution de lumière individuelles réglées sur une largeur plus étroite que celle des régions de distribution lumineuse individuelles les plus éloignées de la région de bord de route (a21) dans la région de voie de circulation inverse (a22).

4. Système de phare de véhicule selon l'une quelconque des revendications 1 à 3, dans lequel :
la deuxième région (a2) comporte en outre une région disposée sur un côté supérieur de la première région (a1).

5. Système de phare de véhicule selon la revendication 3, dans lequel :
Le premier élément émetteur de lumière (14) est une diode laser ; et
la pluralité de deuxièmes éléments émetteurs de lumière agencés (31) est un réseau de LED.

6. Système de phare de véhicule selon la revendication 5, dans lequel :
l'élément de balayage (22) de la première unité de lampe (14) est un miroir MEMS qui balaie un faisceau laser émis par ma diode laser dans des directions à deux dimensions.
